# EUROPÄISCHE PATENTSCHRIFT

(11) **EP 2 290 017 B1**
(45) Veröffentlichungstag und Bekanntmachung des Hinweises auf die Patenterteilung: **27.01.2016**
(21) Anmeldenummer: 10174495.1
(22) Anmeldetag: 30.08.2010
(51) Int. Cl.: C09D 4/00, C08K 3/00

(54) **BLOCKFESTE STRAHLENVERNETZTE LACKSCHICHTEN**
SOLID RADIATION CURED VARNISHING LAYER
COUCHES DE LAQUE AGGLOMÉRANTES ET MISES EN RÉSEAU PAR RAYONNEMENT

(30) Priorität: 01.09.2009 DE 102009029056
(43) Veröffentlichungstag der Anmeldung: 02.03.2011
(73) Patentinhaber: Henkel AG & Co. KGaA, 40589 Düsseldorf (DE)
(72) Erfinder: Guilleux, Annabelle, 92600, Asnières-sur-Seine (FR); Tönnießen, Holger, 52382 Niederzier (DE); Wagner, Sara, 40822, Mettmann (DE); Grauel, Ralf, 40724 Hilden (DE); Bialas, Norbert, 41542 Dormagen (DE); Rauberger, Rainer, 40597 Düsseldorf (DE); Roschkowski, Thomas, 52428 Jülich (DE)

(56) Entgegenhaltungen:
- EP-A1- 2 053 102
- EP-A1- 2 113 527
- WO-A2-02/46323
- US-A1- 2007 178 263
- US-A1- 2008 017 071

## Beschreibung

Die Erfindung betrifft strahlenvernetzbare lösemittelfreie Lacke, die in hoher Schichtstärke aufgetragen werden können. Dabei soll die Schicht auf ein Substrat so dick aufgetragen und vernetzt werden, dass die Schicht haptisch zu erfassen ist. Weiterhin sollen die beschichteten Substrate aufeinander stapelbar sein, d. h., dass die vernetzten Schichten nicht miteinander verblocken sollen.

Für Bücher, Verpackungen und Schildern ist es häufig erwünscht, dass die Oberfläche haptische Eigenschaft aufweist, d.h. sie soll auch zu ertasten sein. Dafür gibt es prinzipiell zwei Verfahren, einerseits kann das Substrat mit einer Prägewalze geprägt werden, so dass eine geformte Oberfläche ausgebildet wird. Eine andere Arbeitsweise trägt auf einer glatten Oberfläche eine dicke Schicht auf, die danach vernetzen soll. Diese Schichten können geformt sein als einzelne Struktur oder Flächen, die nach der Härtung als solche erhaben zu der Oberfläche sind. Solche Gegenstände sollen möglichst rasch herstellbar sein, es wird eine hohe Verarbeitungsgeschwindigkeit benötigt. Deswegen gibt es Versuche, solche Schichten mit schnell härtenden Lackmaterialien zu erhalten.

Strahlenvernetzbare Lacke und Beschichtungsmittel sind bekannt. Diese werden als Lack in dünner Schicht aufgetragen, verlaufen und geben nach Härtung einen glatten Film. Andere Zusammensetzungen werden als Klebstoffschicht aufgetragen, dabei häufig auch in dickerer Schichtstärke, mit Strahlung vernetzt und mit einem zweiten Substrat verklebt. Als Strahlenquelle werden beispielsweise Elektronenstrahlen eingesetzt oder UV-Strahlenquellen.

Die WO 2003/044099 beschreibt eine Beschichtungsmasse auf Basis organischer Bindemittel, die 10 bis 80 % Nanopartikel enthalten soll. Die Bindemittel werden nicht näher spezifiziert, es werden strahlenhärtbare Systeme, 2K- Harz/Vernetzer-Systeme sowie 1 K-nicht reaktive Systeme angegeben.

Die WO2003/002268 beschreibt Verfahren zum Herstellen von Beschichtungen, dabei werden Beschichtungsmittel eingesetzt, die strahlenhärtend sowie zusätzlich thermisch vernetzend sind. Es werden in den Beispielen Vernetzer beschrieben, die zusätzlich zu den ungesättigten Gruppen auch NCO-Gruppen enthalten. Die Beschichtungen werden als Klarlack in der Kfz-Industrie eingesetzt.

Die WO2006/015659 beschreibt strahlenhärtende Bindemittel, die zusätzlich zu dem Bindemittel noch nanoskalige Pigment enthalten. Insbesondere werden auch Zusammensetzungen beschrieben, die zur Vernetzung mehr als einen Härtungsmechanismus benötigen. Als Haftvermittler werden zusätzlich Silanverbindungen beschrieben. EP 2 053 102, WO 02/46323, US 2007/178263, US 2008/01707, und EP 2 113 527 Beschreiben weitere Beschichtungszusammensetzungen, die dünne Strahlenvernetzbare schichte herstellen..

Die bekannten strahlenhärtbare Beschichtungsmittel oder Klebstoffe haben den Nachteil, dass die Vernetzung durch komplizierte Maßnahmen durchgeführt werden muss. Beispielsweise sind Elektronenstrahlquellen aufwändig, außerdem sind sie nicht für alle Substrate geeignet. UV-Strahlen erfordern meist dünne Schichten des zu vernetzenden Lackes. Ist die Schicht zu dick, härtet der Lack nicht ausreichend durch, d.h. die Stabilität der Schicht ist nicht ausreichend. Zusätzliche Härtungsmechanismen erfordern zwei Verfahrensschritte bei der Vernetzung und sind in der endgültigen Vernetzung langsam. Außerdem sind die häufig eingesetzten NCO-Gruppen gesundheitlich bedenklich. Oberflächenklebrige Systeme sind nur als Klebstoff geeignet, sie können nicht als dauerhaft außen liegende Schicht eingesetzt werden.

Es hat sich in der Praxis gezeigt, dass ausschließlich durch Strahlenvernetzung härtende Systeme verschiedene Nachteile aufweisen. Beispielsweise ist eine Härtung bei hoher Schichtstärke nur schwer zu erzielen. Häufig sind die Überzüge nicht ausreichend vernetzt, sie weisen also eine gewisse Klebrigkeit auf. Dadurch können sie nicht unmittelbar nach Herstellung ohne besondere Maßnahmen

Die Dünne Strahlenvernetzbare Schichte Herstellen. aufeinander gestapelt, gerollt oder und gelagert werden. Auch die Migration von nicht im Netzwerk einreagierten Bestandteilen kann zu einer klebrigen Oberflache führen. Arbeitsweisen, die zu einer besseren Vernetzung führen, erfordern länge Strahlungszeiten, d.h. die einzelne Bearbeitung verzögert sich, es sind keine schnellen Arbeitsabläufe möglich. Etektronenstrahlhärtung ist bekannt, erfordert aber ein hohen technischen Aufwand. Außerdem hat sich gezeigt, dass vernetzte Lackschichten in höherer Schichtstärke häufig keine ausreichende Flexibilität haben. Auf harten Substraten, beispielsweise Blechen, ist das nicht notwendig. Bei Verwendung als Lack oder Beschichtungsmittel auf flexiblen Substraten, wie beispielsweise Papier oder Folien, führt es jedoch zu Rissen und Abplatzungen.

Aufgabe der vorliegenden Erfindung ist Bereitstellung eines strahlenhärtbaren Beschichtungsmittels mit ungesättigten funktionellen Gruppen, das in dicker Schicht aufgetragen werden kann. Dabei soll die Schicht durch aktinische Strahlung vernetzbar sein und nach Härtung eine stabile, vernetzte Schicht ergeben. Dabei sollen auch bei Lagerung möglichst keine unvernetzten Monomere oder Oligomere in der Schicht vorhanden sein. Weiterhin soll die Zusammensetzung im Druckverfahren auftragbär sein und als einzelnes Druckbild nicht verlaufen.

Gegenstand der Erfindung ist ein Verfahren zum Herstellen einer Schicht aus strahlenvernetzbaren Beschichtungsmitteln, das Beschichtungsmittel bestehend aus
0 bis 80 Gew.-% (Meth)acrylatmonomere,
2,5 bis 90 Gew.-% (Meth)acrylatoligomere,
5 bis 30 Gew.-% Initiatoren und Beschleuniger,
0,5 bis 5 Gew.-% nanoskalige Füllstoffe
0 bis 5 Gew.-% Additive,
wobei die Summe der Bestandteile 100 % betragen soll und als Beschleuniger mindestens eine tertiäre Aminogruppen-haltige Verbindung enthalten ist, sowie die Füllstoffe ausgewählt werden aus Oxiden, Phosphaten, Halogeniden, Sulfaten oder Oxyhydraten aus Al, Ti, Zr, Si, Zn, Fe; Mn, Ba, Sr, Ca, Mg mit einem mittlerenTeilchendurchmesser von 2 bis 500 nm, dadurch gekennzeichnet, dass auf ein Substrat eine Schicht eines strahlenvernetzbaren Beschichtungsmittel aufgetragen wird, diese Schicht durch UV-Strahlung vernetzt Wird, wobei die Schicht eine Dicke von 20 bis 500 µm aufweist.

Ein weiterer Gegenstand der Erfindung ist ein Substrat mit glatter Oberfläche, das vernetzte Lackschichten in Form von Buchstaben, Worten, Zeichen, Logos, Zahlen oder anderen Formen auf der Oberfläche aufweist, wobei diese Schichten aus einem strahlenvernetzbaren, ungesättigte Doppelbindungen enthaltenden Beschichtungsmittel durch Druck und Vernetzung durch aktinische Strahlung hergestellt worden sind. Ein weiterer Gegenstand der Erfindung ist die Bereitstellung eines Verfahrens zur Herstellung tastbarer Lackschichten.

Das erfindungsgemäße Beschichtungsmittel ist strahlenhärtbar. Dabei kann es sich um beliebige bekannte aktinische Strahlung handeln, beispielsweise auch um Elektronenstrahlen, die bevorzugte Ausführungsform ist aber vernetzbar durch UV-Strahlen. Solche Strahlungsarten in den geeigneten Frequenzbereichen, geeignete Strahlungsquellen oder angepasste Applikationsverfahren sind dem Fachmann bekannt.

Das erfindungsgemäße Beschichtungsmittel soll Oligomere und/oder Monomere enthalten, die mindestens eine strahlenhärtbare reaktive ungesättigte Doppelbindung aufweisen.

Ein Bestandteil eines erfindungsgemäßen Beschichtungsmittels sind mono-, di- oder höherfunktionelle Acrylat- oder Methacrylatester. Solche Acrylat- oder Methacrylatester umfassen beispielsweise Ester der Acrylsäure oder Methacrylsäure mit aromatischen, aliphatischen oder cycloaliphatischen Polyolen oder von Polyetheralkoholen.

Als monofunktioneller Acrylatester können beispielsweise Ester der (Meth)acrylsäure mit einwertigen Alkoholen eingesetzt werden. Beispiele für geeignete Verbindungen sind Acrylsäure- oder Methacrylsäureester der aromatischen, cycloaliphatischen, aliphatischen, linearen oder verzweigten C1 bis C30 Monoalkohole oder von entsprechenden Etheralkoholen. Beispiele für solche Verbindungen sind Methyl(meth)acrylat, Ethyl(meth)acrylat, n-Butyl(meth)acrylat, i-Butyl(meth)acrylat, t-Butyl(meth)acrylat, Pentyl(meth)acrylat, 2-Ethylhexyl-(meth)acrylat, Stearyl(meth)acrylat, Lauryl(meth)acrylat, Cyclohexyl(meth)acrylat, Isobornyl(meth)acrylat; Aryl(meth)acrylate wie zum Beispiel Benzyl(meth)acrylat oder Phenyl(meth), Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxypropylmethacrylat, Cyclohexyloxymethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether-(meth)acrylat und Poly(propylenglycol)methylether(meth)acrylat

Es können auch (Meth)acrylate eingesetzt werden, die zusätzlich eine OH-Gruppe aufweisen. Beispiel dafür sind 2-Hydroxyethyl(meth)acrylat, 2- oder 3- Hydroxypropyl(meth)acrylat, 6-Hydroxyhexyl(meth)acrylat, Polyethylenglykol(meth) acrylat, Polypropylenglykol(meth)acrylat, Glycerinmono-(meth)acrylat, 1,3-Glycerindi(meth)acrylat, 3-Phenoxy-2-hydroxypropyl-(meth)acrylat oder 2-, 3-, oder 4- Hydroxybutyl-(meth)acrylat, 3-Hydroxypropyl(meth)acrylamid sowie N-Hydroxyethyl(meth)acrylamid.

Neben den zuvor dargelegten (Meth)acrylaten können die zu polymerisierenden Zusammensetzungen auch weitere ungesättigte Monomere aufweisen, die mit den zuvor genannten (Meth)acrylaten copolymerisierbar sind. Hierzu gehören unter anderem 1-Alkene, wie 1-Hexen, 1-Hepten, verzweigte Alkene wie beispielsweise Vinylcyclohexan, Vinylverbindungen, wie beispielsweise Vinylacetat, Styrol, substituierte Styrole mit einem Alkylsubstituenten an der Vinylgruppe, heterocyclische Verbindungen wie 2-Vinylpyridin, 3-Vinylpyridin, 2-Methyl-5-vinylpyridin, Vinylpyrimidin, Vinyloxolan oder Vinylfuran.

Als Polyole zur Herstellung von multifunktionellen (Meth)acrylatestern können eine Vielzahl von Polyolen eingesetzt werden. Beispielsweise sind dies aliphatische Polyole mit 2 bis 4 OH-Gruppen pro Molekül und 2 bis etwa 30 C-Atomen. Geeignete aliphatische Polyole sind beispielsweise Ethylenglykol, Propandiol-1,2 oder -1,3, Butandiol-1,4, Butandiol-1,3, Butandiol-2,3, Butendiol-1,4, Pentandiol-1,5, Pentendiole, Hexandiol-1,6, Octandiol-1,8, Dodecandiol und höhere. Homologe, Isomere und Gemische solcher Verbindungen.

Ebenfalls geeignet sind höherfunktionelle Alkohole wie beispielsweise Glycerin, Trimethylolpropan, Pentaerythrit oder Zuckeralkohole, wie Sorbit oder Glucose, sowie oligomere Ether oder Umsetzungsprodukte mit Ethylen- oder Propylenoxid.

Weiterhin können als Polyolkomponente zur Herstellung der Acrylat- oder Methacrylatester die Umsetzungsprodukte niedermolekularer, polyfunktioneller Alkohole mit Alkylenoxiden eingesetzt werden. Die Alkylenoxide weisen vorzugsweise zwei bis etwa vier C-Atome auf. Geeignet sind beispielsweise die Umsetzungsprodukte von Ethylenglykol, Propylenglykol, den isomeren Butandiolen oder Hexandiolen, Glycerin, Trimethylolethan oder Trimethylolpropan, Pentaerythrit mit Ethylenoxid, Propylenoxid oder Butylenoxid oder Gemischen davon.

Beispiele für solche polyfunktionellen (Meth)acrylatester sind Neopentylglykoldi-(meth)acrylat, 1,8-Octandioldi(meth)acrylat, Butandioldi(meth)acrylat, 1,6-Hexandioldi(meth)acrylat, Trimethylolpropantri(meth)acrylat, Pentaerythrit-tetra-(meth)acrylat, Dipentaerythritoltetra(meth)acrylat, Dipentaerytrhitolpenta(meth)acrylat, (Meth)acrylatester des Sorbits und anderer Zuckeralkohole, Ethylenoxid-modifizierte Neopentylglykoldi(meth)acrylate, Propylenoxid-modifizierte Neopentylglykoldi(meth)acrylate, Ethylenoxid-modifizierte oder Propylenoxid-modifizierte 1,6-Hexandioldi(meth)acrylate, Polyethylenglykoldi(meth)acrylate, Polypropylenglykoldi(meth)acrylate Pentaerythritoltri(meth)acrylat, Dipentaerythritol-tetra(meth)acrylat oder Gemische davon.

Tri- und polyfunktionelle Acrylatmonomere umfassen beispielsweise auch Caprolacton-modifiziertes Dipentaerythritolhexa(meth)acrylat, Tris[(meth)-acryloxyethyl] isocyanurat, Caprolacton-modifizierte Tris[(meth)acryloxyethyl]-isocyanurate oder Gemische.

Besonders geeignet sind Umsetzungsprodukte auf Basis von Polyetherdi- oder triolen oder Polyalkylendiolen mit (Meth)acrylestern mit einem Molekulargewicht (Mn) von 200 bis 3000 g/mol, vorzugsweise von 300 bis 2000 g/mol, insbesondere bis etwa 1000 g/mol.

Weitere geeignete Oligomere sind Urethan(meth)acrylate. Es handelt sich dabei um Umsetzungsprodukte von Alkoholen, insbesondere Monoalkoholen, Diolen und/oder Triolen mit Di- oder Tri-Isocyanatverbindungen. Dabei werden die Mengenverhältnisse so gewählt, dass endständig NCO-funktionalisierte Prepolymere erhalten werden. Insbesondere sollen die Prepolymere linear sein, d.h. überwiegend aus Monoalkoholen oder Diolen und Diisocyanaten hergestellt werden. Eine zusätzliche Verwendung von geringen Anteilen an trifunktionellen Polyolen oder Isocyanaten ist möglich. Solche PU-Prepolymere können dann mit OH-reaktiven (Meth)acrylverbindungen zu den PU-(meth)acrylaten umgesetzt werden.

Es können die für Klebstoffanwendung bekannten monomeren Di- oder Triisocyanate eingesetzt werden. Beispiele für geeignete monomere Polyisocyanate sind 1,5-Naphthylendiisocyanat, 2,2'-, 2,4- und/oder 4,4'-Diphenylmethandiisocyanat (MDI), hydriertes MDI (H12MDI), Xylylendiisocyanat (XDI), Tetramethylxylylendiisocyanat (TMXDI), 4,4'-Dibenzyldiisocyanat, 1,3-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato2,4,4-trimethylhexan, 1-Isocyanatomethyl-3-isocyanato-1,5,5-trimethylcyclohexan (IPDI), Tetramethoxybutan-1,4-diisocyanat, Hexan-1,6-diisocyanat (HDI), Dicyclohexylmethandiisocyanat, Cyclohexan-1,4-diisocyanat, Ethylendiisocyanat, Trimethylhexamethylendiisocyanat, 1,4-Diisocyanatobutan, 1,12-Diisocyanatododecan, Dimerfettsäurediisocyanat.

Zur Verwendung als Polyol geeignet sind beispielsweise niedermolekulare Polymere ausgewählt aus Polyester-, Polyether-, Polycarbonat-, Polyacetalpolyolen, die terminale OH-Gruppen aufweisen, oder aliphatische oder aromatische 1- bis 3-wertige Alkohohole, mit einem Molekulargewicht (MN) von etwa 200 bis 5000 g/mol (zahlenmittleres Molekulargewicht, MN , wie durch GPC bestimmbar).

Monofunktionelle Verbindungen sind beispielsweise aliphatische Alkohole mit 1 bis 30 C- Atomen, wie beispielsweise Ethanol, Propanol, Butanol, Hexanol, Octanol und höhere Homologe, sowie die entsprechenden Thioverbindungen. Es können auch aromatische Alkohole eingesetzt werden, beispielsweise Alkylphenole, wie Nonylphenol. Auch höherfunktionelle aliphatische Polyole sind geeignet, insbesondere Diole. Geeignete Verbindungen sind beispielsweise Polyole mit 2 bis 40 C-Atomen, beispielsweise Ethylenglycol, Propandiol, Butandiol und höhere Homologe.

Die Umsetzung der Polyole mit den Polyisocyanaten kann in bekannter Weise beispielsweise in Gegenwart von Lösemitteln erfolgen, bevorzugt wird jedoch in lösemittelfreier Form gearbeitet. Zur Beschleunigung der Reaktion wird üblicherweise die Temperatur erhöht, beispielsweise zwischen 40 bis 80°C. Gegebenenfalls können zur Beschleunigung der Reaktion in der Polyurethanchemie übliche.Katalysatoren zum Reaktionsgemisch zugesetzt werden.

In einer weiteren Reaktion werden die NCO-Gruppen anschließend mit Verbindungen umgesetzt, die eine funktionelle Gruppe tragen, die mit Isocyanaten reagieren kann und als weitere funktionelle Gruppe eine durch radikalische Polymerisation vernetzbare Doppelbindung aufweist. Diese habe üblicherweise ein Molekulargewicht von weniger als 1000 g/mol, insbesondere unter 500 g/mol.

Beispiele für solche Verbindungen sind Ester von α-β-ungesättigten Carbonsäuren mit niedermolekularen insbesondere aliphatischen Alkoholen, die im Alkylrest noch eine weitere OH-Gruppe tragen. Entsprechende OH-Gruppen tragende Ester sind vorstehend bereits beschrieben.

Die zur Herstellung der PU-Prepolymer-Vorprodukte geeigneten Polyole sollen ein Molekulargewicht bis 5000 g/mol aufweisen. Insbesondere soll das Molekulargewicht kleiner 3000 g/mol sein. Im Falle von Polyetherpolyolen soll das Molekulargewicht zwischen 200 bis 2000 g/mol liegen, insbesondere zwischen 400 und 1000 g/mol. Im Falle von Polyesterpolyolen soll das Molekulargewicht bevorzugt kleiner 1500 g/mol betragen. Insbesondere geeignet sind lineare Polyetherpolyole.

Geeignete polyfunktionelle Oligomere oder Polymere, die strahlenhärtbare Gruppen aufweisen, sind dem Fachmann bekannt und kommerziell erhältlich, beispielsweise unter den Handelsnamen Photomer®, Laromer®, Craynor®, Genomer® oder Ebecryl®.

Bevorzugt sind die Mischungen der (Meth)acrylatmonomere oder -oligomere im Bereich von 15°C bis 100°C, bevorzugt 20°C bis 80°C, fließfähig.

Das erfindungsgemäße strahlenvernetzbare Beschichtungsmittel soll 2,5 bis 90 Gew.-% (bezogen auf das gesamte Beschichtungsmittel) an (Meth)oligomeren enthalten, insbesondere 5 bis 80 Gew.-%. Um eine geeignete Viskosität zu erhalten, können von 0 bis 80 Gew.-% (Meth)acylatmonomere zugesetzt werden, bevorzugt von 2,5 bis 50 Gew.-% (Meth)acrylatmonomeren.

Als weitere notwendige Komponente enthält das erfindungsgemäße Beschichtungsmittel mindestens einen nanoskaligen Füllstoff, der ausgewählt ist aus der Gruppe der Phosphate, Oxide, Nitride, Halogenide, Sulfide mit Elementen der zweiten bis vierten Hauptgruppe, der Übergangselemente oder der Lanthanide. Nanoskalige Füllstoffe werden auch als nanodisperse Füllstoffe oder "Nano-Partikel" bezeichnet, da deren kleinste Partikel nicht mehr als 1000 Nanometer (nm). Die im nanoskaligen Füllstoff enthaltenen Nanopartikel weisen bevorzugt im zahlengewichteten Mittel Größen im Bereich von 1 bis 500 nm, besonders bevorzugt zwischen 2 und 200 nm auf. Die Partikelgröße wird dabei bevorzugt nach der UPA-Methode (Ultrafine Particle Analyzer) bestimmt, zum Beispiel nach dem Laser-Streulicht-Verfahren ("Laser Light Back Scattering"). Um eine Agglomeration oder ein Zusammenwachsen der Nanopartikel zu verhindern oder zu vermeiden, können diese oberflächenmodifiziert oder oberflächenbeschichtet sein.

Der nanoskalige Füllstoff wird beispielsweise ausgewählt aus der Gruppe der Oxide, Nitride, Phosphate, Sulfate, insbesondere der gemischte Oxid-/Hydroxid-/Halogenid-Verbindungen des Aluminums, Siliciums, Zirkoniums, Titans, Zinks, Eisens, Mangan oder der (Erd)Alkalimetalle. Hierbei handelt es sich beispielsweise um Tonerden, zum Beispiel Aluminiumoxide; Schichtsilikate wie beispielsweise Bentonit, Montmorillonit, Glimmer, Vermiculit oder deren Mischungen. Es können auch Phyllosilikate, wie Magnesiumsilikat oder Alluminiumsilikat; Zinkoxid, Magnesiumoxid, Aluminiumoxid, Magnesiumfluorid, Bariumsulfat, Zinksulfid, Titandioxid als nanoskale Füllkörper geeignet. In einer bevorzugten Ausführungsform der Erfindung besteht diese Komponente aus Titandioxidoder amorphem Siliciumdioxid.

Der Anteil der eingesetzten nanoskaligen Füllstoffes im erfindungsgemäßen Beschichtungsmittel beträgt 0,1 bis 10 Gew.-%, insbesondere 0,5 Gew.-% bis 5 Gew.-%, vorzugsweise 1 bis 4 Gew.-%. Der nanoskalige Füllstoff ist in einer fließfähigen Phase dispergiert, wobei die fließfähige Phase polymerisierbare Monomere, Oligomere und/oder Polymere enthalten kann. Besonders bevorzugt ist die als Dispergiermittel eingesetzte fließfähige Phase wasserfrei, sie enthält also nur Spuren Wasser. Menge und Teilchengrößen werden so ausgewählt, dass ein transparentes Beschichtungsmittel erhalten wird.

Als notwendiger Bestandteil des Beschichtungsmittels ist mindestens ein Photoinitiator enthalten. Dieser soll insbesondere bei Bestrahlung einer Wellenlänge von etwa 210 nm bis etwa 420 nm dazu in der Lage ist, eine radikalische Polymerisation olefinisch ungesättigter Doppelbindungen zu initiieren. Im Rahmen der vorliegenden Erfindung sind grundsätzlich alle handelsüblichen Photoinitiatoren einzeln oder als Gemisch geeignet.

Beispielsweise sind dieses alle Norrish-Type I fragmentierenden und Norrish-Typ II Substanzen. Solche Initiatoren sind dem Fachmann bekannt und können beispielsweise unter den Handelsnamen Irgacure®, Darocure®, Speedcure® erworben werden. Weiterhin geeignet sind beispielsweise Benzophenon, Thioxanthon, 2,4,6-Trimethylbenzoldiphenylphosphinoxid und entsprechende Derivate der genannten Verbindungen. Die Menge der Initiatoren beträgt von 0,5 bis 10 Gew.-%, insbesondere 0,5 bis 5 Gew.-%.

Zusätzlich muss das erfindungsgemäße Beschichtungsmittel mindestens einen basischen Bestandteil als Reaktionsbeschleuniger enthalten. Geeignet sind beispielsweise aliphatische tertiäre Amine insbesondere mit cyclischer Struktur. Unter den tertiären Aminen sind auch solche geeignet, die zusätzlich noch reaktive Gruppen tragen, insbesondere Hydroxyl-, Carboxyl- und/oder Epoxygruppen. Beispiel sind Dialkylmonoalkanolamine, wie Dimethyl- oder Diethylmonoethanolamin, Methylethylmonoethanolamin, Trialkanolamine, wie Triethanolamin, Trimethanolamin, Tripropanolamin, Tributanolamin, Alkyldialkanolamine, wie Diethanolethylamin, Diethanolbutylamin, Diethanohexylamin, sowie deren Ethoxylierungs- und Propoxylierungs-Produkte, Diaza-bicyclo-octan (DABCO), Trimethylamin, Dimethylbenzylamin, Tetramethylguanidin, Bis-dimethylaminomethyl-phenol, N,N-Dimethylpiperazin, N-(2-hydroxyethoxyethyl)-2-azanorbornane, Morpholino-Verbindungen, wie bis(2-(2,6-dimethyl-4-morpholino) ethyl)-(2-(4-morpholino) ethyl) amin, Bis(2-(2,6-dimethyl-4-morpholino) ethyl)-(2-(2,6-diethyl-4-morpholino) ethyl) amin, Tris(2-(4-morpholino) ethyl) amin, Dimethylaminopropylmorpholin, Bis-(morpholinopropyl)-methylamin, Diethylaminopropylmorpholin, Dimorpholinodiethylether, ungesättigte bicyclische Amine, wie Diazabicycloundecen (DBU), N,N,N,N-Tetramethylbutan-1,3-diamin, 1,5-Diazabicyclo-(4,3,0)-Non-5-en(DBN), oligomerisierte oder polymerisierte Amine, wie N-methyliertes Polyethylenimin.

Eine besondere Ausführungsform setzt auch basische Verbindungen ein, die zusätzlich noch reaktive Doppelbindungen enthalten. Beispiele dafür sind Di(meth)acryloyldialkanolalkylamine oder Tri(meth)acryloyltrialkanolamine. Dabei polymerisieren diese Verbindungen dann im Netzwerk ein.

Die erfindungsgemäß notwendigen basischen Reaktionsbeschleuniger können einzeln oder im Gemisch vorliegen. Die Menge soll zwischen 0,1 bis 10 % betragen, insbesondere zwischen 0,2 bis 3 Gew.-%. Es ist bevorzugt, wenn die basischen Substanzen nur tertiäre Amino- oder Amidgruppen enthalten. In einer bevorzugten Ausführungsform werden solche basischen Substanzen eingesetzt, die nur eine geringe Migration im Klebstoff zeigen. Das kann beispielsweise durch polymere Amine erzielt werden. Eine andere Möglichkeit besteht darin, dass die basische Komponente reaktive Gruppen enthält, die in das Netzwerk eingebaut werden können. Insbesondere sollen Gemische aus Initiatoren und Beschleunigern vorliegen, bevorzugt zusammen mit nanoskaligen Pigmenten.

Zu den im Rahmen der vorliegenden Erfindung zusätzlich einsetzbaren Hilfs- und Zusatzstoffen zählen beispielsweise Weichmacher, Stabilisatoren, Antioxidantien, Haftvermittler, Harze, nicht reaktive Polymere, Farbstoffe, Verlaufsmittel, Entschäumungsmittel. Diese können insoweit eingesetzt werden, wie die strahleninduziert Vernetzungsreaktion nicht behindert wird. Bevorzugt sind die Beschichtungsmittel lösemittelfrei. Die Menge der Additive kann von 0 bis zu 5 Gew.-% reichen.

In einer Ausführungsform kann ein geeigneter Klebstoff optional ein klebrigmachendes Harz enthalten. Das Harz bewirkt eine zusätzliche Klebrigkeit. Es können grundsätzlich alle Harze eingesetzt werden, die mit dem Haftklebstoff und dem Klebstoffvorläufer verträglich sind, d.h. ein weitgehend homogenes Gemisch bilden. Es sind dieses beispielsweise aromatische, aliphatische oder cycloaliphatische Kohlenwasserstoff-Harze, sowie modifizierte oder hydrierte Versionen davon, Hydroabietylalkohol und seine Ester, modifizierte Naturharze wie Balsamharz, Tallharz oder Wurzelharz, gegebenenfalls teilhydriertem Kolophonium, Terpen-Harze oder Acrylsäure-Copolymerisate.

Gegebenenfalls können als nicht reaktive Polymere geringe Anteile an thermoplastischen Polyethern, Polyestern, Polyolefinen, Polyacrylaten oder Polyamiden zugesetzt werden. Diese sollen keine strahlenreaktive Gruppen aufweisen, es können aber andere funktionelle Gruppen enthalten sein, wie OH-, NH- oder Epoxygruppen. Diese Polymere beeinflussen die Kohäsion des vernetzten Klebstoffs.

In einer besonderen Ausführungsform ist der Klebstoff gefärbt. Das kann durch Pigmente oder Farbstoffe erzielt werden. Diese werden so ausgewählt, dass sie die Strahlenvernetzung nicht behindern.

Das erfindungsgemäße Beschichtungsmittel weist bei bis zu 80°C eine Viskosität von weniger als 5000 mPas (Brookfield RVT, EN ISO 2555) auf. In bevorzugten Ausführungsformen der Erfindung wird die Viskosität des Klebstoffs so gewählt, dass er bei typischen Verarbeitungstemperaturen eine Viskosität von 200 mPas bis etwa 3000 mPas aufweist, insbesondere unter 1500 mPas. Geeignete Verarbeitungstemperaturen sind beispielsweise 20 bis etwa 60°C, insbesondere unter 50°C.

Die erfindungsgemäßen Beschichtungsmittel sind fließfähig. Sie können auf verschiedene Art und Weise aufgetragen werden, insbesondere ist es jedoch zweckmäßig, wenn die Viskosität so ausgewählt wird, dass ein Auftrag als Druck erfolgen kann. Dabei ist es möglich, dass das erfindungsgemäße Beschichtungsmittel erwärmt wird auf eine Temperatur, insbesondere zwischen 20 und 50°C. Dabei kann die Viskosität abgesenkt werden, so dass eine geeignete Viskosität für einen Druckauftrag erhalten wird.

Der Auftrag geschieht durch die dem Fachmann bekannten Druckwerke, beispielsweise als Tiefdruck, Hochdruck oder Siebdruck. Dabei ist es durch Auswahl der Druckvorlage möglich, einen flächigen Überzug zu erhalten, es ist aber eine bevorzugte Arbeitsweise, dass das erfindungsgemäße Beschichtungsmittel in Form von Druckbildern als Text, Wort, Bild oder Muster aufgetragen wird. Dabei geht eine Arbeitsweise so vor, dass auf das Substrat ein übliches farbiges Druckbild aufgebracht wird. Über dieses Bild wird danach eine entsprechende Form mit einem erfindungsgemäßen Beschichtungsmittel aufgetragen. Damit ist durch die klare vernetzte Schicht das Druckbild zu erkennen und gleichzeitig in seiner Form zu ertasten. Eine andere Arbeitsweise setzt direkt ein gefärbtes Beschichtungsmittel ein. Damit ist zu erkennen, in welcher Form das Druckbild aufgebracht wurde.

Durch den Auftrag mit Druckwerken ist es weiterhin möglich, dass der erfindungsgemäße Klebstoff in vorgegebenen Formen, wie Buchstaben, Schriftzügen, Logos, Muster, Figuren oder ähnlichem aufgebracht wird. Gegebenenfalls ist es möglich, eine farbig bedruckte Oberfläche zu erzeugen, oder es wird auf eine bedruckte Fläche eine gleichartig geformte durchsichtige Schicht aufgetragen und vernetzt.

Unmittelbar nach dem Auftragen des Beschichtungsmittels wird dieses durch aktinische Strahlung vernetzt. Dabei kann es sich um Elektronenstrahlung handeln, bevorzugt ist jedoch UV-Strahlung, insbesondere UV-C-Strahlung. Dabei kann die Wellenlänge von 210 bis 480 nm betragen insbesondere bis 420nm. Die Wellenlänge kann dem Klebstoff und dem eingesetzten Initiator angepasst werden. Die Bestrahlung kann kontinuierlich erfolgen oder es wird eine Blitzlichtbestrahlung vorgenommen. Dabei kann die Bestrahlungszeit von 0,01 sek. bis zu 10 sek. betragen. Geräte und Verfahrensparameter zum Vernetzen von UV-aktiven Klebstoffen sind dem Fachmann bekannt und können passend ausgewählt werden.

Das erfindungsgemäße Beschichtungsmittel kann in einer Schichtdicke von 20 bis 500 µm, insbesondere von 40 bis 300 µm, insbesondere mehr als 100 µm aufgetragen werden. Unmittelbar nach der Strahlenvernetzung ist die Beschichtung durchgehärtet und das Substrat kann weiter verarbeitet werden.

Durch die Auswahl des Beschichtungsmittels wird erreicht, dass das beschichtete Substrat blockfest ist. Unter blockfest wird gemeint, dass mehrere beschichtete Substrate übereinander gestapelt werden können. Dabei verkleben die Schichten nicht, die einzelnen Substrate, beispielsweise die verschiedenen Blätter, Papier oder Folie können ohne Beeinträchtigung der Oberfläche und ohne einander zu kleben wieder separiert werden.

Der Druckauftrag zu der notwendigen Schichtstärke kann in einem Druckauftrag oder in mehreren Auftragsstufen erfolgen. Dabei ist es zweckmäßig, nach jedem Schritt eine Vernetzung durch aktinische Strahlung durchzuführen. Ist die Schicht zu dick, ist keine ausreichende Vernetzung sichergestellt, die vernetzte Schicht bleibt klebrig. Ist die Schicht sehr dünn, müssen mehrere Schichten aufgetragen werden. Das macht das Verfahren aufwändiger.

Das Beschichtungsmittel weist eine Viskosität und eine Oberflächenspannung auf, dass ein Verlaufen des Druckbildes am Rand auch in dickerer Schicht nicht erfolgt. Es sollen konturscharfe Druckbilder entstehen. Es können so bei den oben genannten Schichtdicken Zeichnen, Logos oder Formen aufgedruckt werden, die haptisch zu erfassen sind. Diese zeichnen sich dadurch aus, dass steile Flanken des Druckbildes gebildet sind, es finden keine allgemeines Verlaufen und ein fließender Übergang zwischen Substratoberfläche und Schichtoberfläche auf.

Durch die Auswahl der Beschleuniger ist außerdem sichergestellt, dass das Beschichtungsmittel in dicker Schicht durchhärtet. Dadurch kann sichergestellt werden, dass nur Spuren, d.h. nur Verunreinigungen, von nicht vernetzten Monomeren oder Oligomeren in der strahlengehärteten Beschichtung vorliegen. Diese könnten sonst, ggf. nach längerer Lagerung, an die Oberfläche der aufgetragenen Schicht migrieren. Das würde zu einer erhöhten Oberflächenklebrigkeit führen, eine Blockfestigkeit wäre dann nicht mehr gegeben.

Ein weiterer Gegenstand der vorliegenden Erfindung ist ein Gegenstand aus einem Substrat, das auf seiner Oberfläche eine vernetzte Schicht eines erfindungsgemäßen Beschichtungsmittels aufweist. Dabei soll die Schichtdicke der vernetzten Schicht zwischen 20 bis 500 µm betragen, insbesondere zwischen 100 und 300 µm. Die Schichten können durchgehend ausgebildet sein, wobei Teile des Substrates ausgenommen sind (als negatives Muster), insbesondere ist jedoch eine Beschichtung aufgebracht, die intermittierend nur Teile des Substrates bedeckt in Form von Buchstaben, Zahlen, Worten, Logo, Bildern oder ähnlichen Figuren, sodass erhabene Schichten erhalten werden.

Die erfindungsgemäßen Gegenstände können eine farbige Oberfläche aufweisen und bedruckt sein. In Abstimmung mit dem Untergrund kann die erfindungsgemäße vernetzte Schicht als klare Schicht oder als pigmentierte Schicht aufgebracht werden. Damit kann sichergestellt werden, dass zusätzlich zu den optischen Eigenschaften der Substratoberfläche entsprechende Informationen auch haptisch, d.h. über den Tastsinn, aufgenommene werden können. Eine andere Arbeitsweise färbt die aufgetragen Schicht ein und macht diese so direkt sichtbar.

Die erfindungsgemäßen Gegenstände können in Form von Etiketten, Seiten, Folien und Klebebändern usw. ausgebildet sein. Diese können auf räumlichen Formen, beispielsweise Flaschen, Dosen, Quadern oder anderen Verpackungen aufgebracht sein. Eine andere Arbeitsweise bringt die vernetzte Schicht auf das Substrat als räumlich geformtes Substrat auf.

Durch den erfindungsgemäßen Gegenstand ist es möglich, die Oberfläche von Gegenständen räumlich zu gestalten. Dabei kann nur eine rein optische reliefartige Gestaltung beabsichtigt sein, insbesondere ist jedoch auch eine Gestaltung beabsichtigt, die haptisch wahrzunehmen ist.

Die erfindungsgemäßen Beschichtungsmittel können beispielsweise eingesetzt werden, um Braille- Schrift zusätzlich zu lesbaren Informationen auf entsprechenden Gegenständen aufzutragen.

Die nachfolgenden Beispiele sollen die Erfindung erläutern.

### Beispiel 1 :

| | |
|---|---|
| Bisphenol A-Epoxydiacrylat | 50,0 |
| Tripopylenglykoltriacrylat | 30,0 |
| Acryliertes Aminophenol | 5,0 |
| Diphenyl(2,4,6Trimethylbenzoyl)Phosphinoxid | 2,5 |
| Methyldiethanolamin | 4,0 |
| Benzophenon | 5,5 |
| Entschäumer (Silikon-haltig) | 3,0 |

Die Bestandteile werden unter Ausschluss von Sauerstoff gemischt.
Das Beschichtungsmittel hat eine Viskosität von ca. 1300 mPas bei 21 °C.

### Beispiel 2 (erfindungsgemäß):

| | |
|---|---|
| Bisphenol A-Epoxydiacrylat | 49,0 |
| Tripopylenglykoltriacrylat | 29,4 |
| Acryliertes Aminophenol | 4,9 |
| Diphenyl(2,4,6Trimethylbenzoyl)Phosphinoxid | 2,5 |
| Methyldiethanolamin | 3,9 |
| Benzophenon | 5,4 |
| Entschäumer (Silikon-haltig) | 2,9 |
| Nano-skaliges Pigment | 2,0 |

Die Bestandteile werden unter Ausschluss von Sauerstoff gemischt.
Das Beschichtungsmittel hat eine Viskosität von ca. 1300 mPas bei 21°C.

Aus beiden Beschichtungsmitteln wird jeweils mit einem Rakel eine Schicht von 25 µm, 200 µm und 300 µm hergestellt. Diese wird mit einer Hg-UV-Lampe (λ= ca. 210 bis 280 nm) für 15 sec bestrahlt in einem Abstand von 1 bis 5 cm.

Bei 25 µm Schichtdicke sind beide Überzugsschichten durchgehärtet.
Bei höherer Schichtdicke (200 + 300 µm) ist nur Beispiel 2 stapelbar und blockfest.

Beispiel 2 wird mit einer Druckvorrichtung aufgetragen. Die Schichtdicke (nach dem Vernetzen) beträgt 250 µm. Das Druckbild wird als Buchstaben ausgebildet. Die Buchstaben sind gut zu tasten, die Seitenflanken sind steil ausgebildet und nicht verlaufen.

Beispiel 2 wird in einer Schichtdicke von 200 µm in Form eines Zeichens gedruckt und UV-vernetzt. Auf die gleiche bedruckte Fläche wird eine weitere Schicht von 200 µm aufgetragen und vernetzt. Das Zeichen ist zu testen.

Für eine Folie mit 250 µm Schichtdicke wird der COF bestimmt (größer 60°). Die beschichteten Flächen sind stapelbar und blockfest.

Die Blockfestigkeit wird als COF (Coefficient of friction) (ISO 8295) bestimmt. Dabei wird eine Schicht auf ein Papier aufgetragen (250 µm) bestrahlt und vermerkt. Nach 48 h Lagerung bei Raumtemperatur wird dieses Papier mit Schichtseite oben auf einer Platte befestigt, die in ihrer Neigung verstellt werden kann.
Es wird auf die Oberfläche ein genormter Block gelegt, danach die Platte in ihrer Neigung verstellt. Gemessen wird die Neigung, bei der / ab der der Block verrutscht.
Bei blockenden Überzügen beträgt der Neigungswinkel > 60°, bei nicht blockenden Überzügen beträgt der Winkel bei Beginn des Abrutschens weniger als 60°.

## Patentansprüche

1. Verfahren zum Herstellen einer Schicht aus strahlenvernetzbaren Beschichtungsmitteln, das Beschichtungsmittel bestehend aus
0 bis 80 Gew.-% (Meth)acrylatmonomere,
2,5 bis 90 Gew.-% (Meth)acrylatoligomere,
5 bis 30 Gew.-% Initiatoren und Beschleuniger,
0,5 bis 5 Gew.-% nanoskalige Füllstoffe
0 bis 5 Gew.-% Additive,
wobei die Summe der Bestandteile 100 % betragen soll und als Beschleuniger mindestens eine tertiäre Aminogruppen-haltige Verbindung enthalten ist, sowie die Füllstoffe ausgewählt werden aus Oxiden, Phosphaten, Halogeniden, Sulfaten oder Oxyhydraten aus Al, Ti, Zr, Si, Zn, Fe, Mn, Ba, Sr, Ca, Mg mit einem mittlerenTeilchendurchmesser von 2 bis 500 nm, **dadurch gekennzeichnet, dass** auf ein Substrat eine Schicht eines strahlenvernetzbaren Beschichtungsmittel aufgetragen wird, diese Schicht durch UV-Strahlung vernetzt wird, wobei die Schicht eine Dicke von 20 bis 500 µm aufweist.

2. Verfahren nach Anspruch 1, **dadurch gekennzeichnet, dass** die Schicht in Form von erhabenen Formen aufgebracht wird.

3. Verfahren nach einem der Ansprüche 1 bis 2, **dadurch gekennzeichnet, dass** das Beschichtungsmittel eine Viskosität von 200 bis 5000 mPas bei Verarbeitungstemperatur aufweist und im Druckauftrag aufgetragen wird.

4. Verfahren nach einem der Ansprüche 1 bis 3, **dadurch gekennzeichnet, dass** die Schicht durch mehrmaliges Auftragen und Vernetzen des Beschichtungsmittels erhalten wird.

5. Verfahren nach einem der Ansprüche 1 bis 4, **dadurch gekennzeichnet**, das Beschichtungsmittel 0,5 bis 10 Gew.% von Initiatoren und 0,1 bis 10 Gew.% an Beschleunigern enthält.

6. Verfahren nach einem der Ansprüche 1 bis 5, **dadurch gekennzeichnet, dass** die nano-Partikel transparent im Beschichtungsmittel dispergiert sind.

7. Gegenstand aus einem Substrat und vernetzten Schichten eines Beschichtungsmittels nach einem Verfahren nach Anspruch 1 bis 6, **dadurch gekennzeichnet, dass** die vernetzte Schicht eine Dicke von 20 bis zu 500 µm aufweist.

8. Gegenstand nach Anspruch 7, **dadurch gekennzeichnet, dass** die Schichten erhabene Formen bilden, insbesondere das die Schicht tastbar ist.

9. Gegenstand nach Anspruch 7, **dadurch gekennzeichnet, dass** die Schichten in Form von Zahlen, Buchstaben, Logo oder Bildern ausgebildet sind.

10. Gegenstand nach einem der Ansprüche 7 bis 9, **dadurch gekennzeichnet, dass** die Schichten eingefärbt sind oder durchsichtig über einem Druckbild angebracht sind.

11. Gegenstand nach einem der Ansprüche 7 bis 10 in Form eines flachen Substrates, insbesondere in Form eines Etiketts, Seite, Folie oder Klebeband.

12. Gegenstand nach einem der Ansprüche 7 bis 10 in Form einer Verpackung, insbesondere als Flasche, Dose oder Quader.

## Claims

1. Method for manufacturing a layer of radiation crosslinkable coating agents, the coating agent consisting of
0 to 80% by weight (meth)acrylate monomers,
2.5 to 90% by weight (meth)acrylate oligomers,
5 to 30%% by weight initiators and accelerators,
0.5 to 5% by weight nanoscale fillers,
0 to 5% by weight additives,
wherein the sum of the ingredients should amount to 100% and at least one compound containing tertiary amino groups is included as an accelerator, and the fillers are selected from oxides, phosphates, halides, sulfates or hydroxides of Al, Ti, Zr, Si, Zn, Fe, Mn, Ba, Sr, Ca, Mg having an average particle diameter of 2 to 500 nm, **characterized in that** a layer of a radiation crosslinkable coating agent is applied to a substrate, and the layer is crosslinked by UV radiation, the layer having a thickness of 20 to 500 µm.

2. Method according to claim 1, **characterized in that** the layer is applied in the form of elevated shapes.

3. Method according to any one of claims 1 to 2, **characterized in that** the coating agent has a viscosity of 200 to 5000 mPas at the processing temperature and is applied as a printing job.

4. Method according to any one of claims 1 to 3, **characterized in that** the layer is obtained by repeated application and crosslinking of the coating agent.

5. Method according to any one of claims 1 to 4, **characterized in that** the coating agent contains 0.5 to 10% by weight initiators and 0.1 to 10% by weight accelerators.

6. Method according to any one of claims 1 to 5, **characterized in that** the nanoparticles are dispersed transparently in the coating agent.

7. Article of a substrate and crosslinked layers of a coating agent by a method according to claims 1 through 6, **characterized in that** the crosslinked layer has a thickness of 20 to 500 µm.

8. Article according to claim 7, **characterized in that** the layers form elevated shapes, in particular the layer being palpable.

9. Article according to claim 7, **characterized in that** the layers are designed in the form of numbers, letters, logos or images.

10. Article according to any one of claims 7 to 9, **characterized in that** the layers are pigmented or transparent and are applied over a print image.

11. Article according to any one of claims 7 to 10 in the form of a flat substrate, in particular in the form of a label, page, film or adhesive tape.

12. Article according to any one of claims 7 to 10 in the form of a package, in particular as a bottle, can or cube.

## Revendications

1. Procédé de production d'une couche d'agents de revêtement réticulables par rayonnement, l'agent de revêtement étant constitué de
0 à 80% en poids de monomères (méth)acrylate,
2,5 à 90% en poids d'oligomères (méth)acrylate,
5 à 30% en poids d'initiateurs et d'accélérateurs,
0,5 à 5% en poids de charges nanométriques,
0 à 5% en poids d'additifs,
la somme des constituants étant égale à 100%, et contenant comme accélérateur au moins un composé aminé tertiaire, et les charges étant choisies parmi les oxydes, les phosphates, les halogénures, les sulfates ou les oxyhydrates de Al, Ti, Zr, Si, Zn, Fe, Mn, Ba, Sr, Ca, Mg ayant un diamètre moyen de particules de 2 à 500 nm, **caractérisé en ce que** l'on applique sur un substrat une couche d'un agent de revêtement réticulable par rayonnement, cette couche étant réticulée par un rayonnement UV, la couche ayant une épaisseur de 20 à 500 µm.

2. Procédé selon la revendication 1, **caractérisé en ce que** la couche est appliquée sous forme de formes en relief.

3. Procédé selon l'une des revendications 1 à 2, **caractérisé en ce que** l'agent de revêtement a une viscosité de 200 à 5000 mPa.s à la température de traitement et est appliqué dans la tâche d'impression.

4. Procédé selon l'une des revendications 1 à 3, **caractérisé en ce que** la couche est obtenue par application et réticulation répétées de l'agent de revêtement.

5. Procédé selon l'une des revendications 1 à 4, **caractérisé en ce que** l'agent de revêtement contient 0,5 à 10% en poids d'initiateurs et 0,1 à 10% en poids d'accélérateurs.

6. Procédé selon l'une des revendications 1 à 5, **caractérisé en ce que** les nanoparticules sont dispersées de façon transparente dans l'agent de revêtement.

7. Article constitué d'un substrat et de couches réticulées d'un agent de revêtement selon un procédé des revendications 1 à 6, **caractérisé en ce que** la couche réticulée a une épaisseur de 20 à 500 µm.

8. Article selon la revendication 7, **caractérisé en ce que** les couches forment des formes en relief, en particulier **en ce que** la couche est palpable.

9. Article selon la revendication 7, **caractérisé en ce que** les couches se présentent sous la forme de nombres, de lettres, de logos ou d'images.

10. Article selon l'une des revendications 7 à 9, **caractérisé en ce que** les couches sont colorées ou sont appliquées de façon transparente par-dessus une image imprimée.

11. Article selon l'une des revendications 7 à 10 se présentant sous la forme d'un substrat plat, en particulier sous la forme d'une étiquette, d'une feuille, d'un film ou d'une bande adhésive.

12. Article selon l'une des revendications 7 à 10 se présentant sous la forme d'un emballage, en particulier d'une bouteille, d'une boîte ou d'un paallépipède.
